Europäisches Patentamt

European Patent Office

Office européen des brevets

(19)

(11) Veröffentlichungsnummer : **0 061 666**
**B1**

(12) **EUROPÄISCHE PATENTSCHRIFT**

(45) Veröffentlichungstag der Patentschrift :
26.06.85

(21) Anmeldenummer : 82102251.4

(22) Anmeldetag : 19.03.82

(51) Int. Cl.⁴ : **A 23 N 17/00, B 01 F 15/02**

(54) Verschwenkbares Futtermittelmischgerät.

(30) Priorität : 01.04.81 DE 3113140
19.06.81 DE 3124269

(43) Veröffentlichungstag der Anmeldung :
06.10.82 Patentblatt 82/40

(45) Bekanntmachung des Hinweises auf die Patenterteilung : 26.06.85 Patentblatt 85/26

(84) Benannte Vertragsstaaten :
AT BE CH DE FR GB IT LI NL SE

(56) Entgegenhaltungen :
AU-A-    34 616
DE-A- 2 535 204
DE-C-   150 679
FR-A- 2 410 443

(73) Patentinhaber : Hoopman Onderzoek en Ontwikkeling
B.V.
Dinxperlosestraatweg 88
NL-Ijzerlo gem. Aalten (NL)

(72) Erfinder : Hoopman, Abraham
Dinxperlosestraatweg 88
Ijzerlo Gmd. Aalten (NL)

(74) Vertreter : Schulze Horn, Stefan, Dipl.-Ing. et al
Patentanwälte Dipl.-Ing. S. Schulze Horn M.SC. Dr. H.
Hoffmeister Goldstrasse 36
D-4400 Münster (DE)

Jouve, 18, rue St-Denis, 75001 Paris, France

EP 0 061 666 B1

**Beschreibung**

Die Erfindung bezieht sich auf ein Mischgerät zum Mischen insbesondere von Futtermischungen, mit einem nach oben offenen Mischtrog, in dem ein Mischwerk um eine waagerechte Welle rotiert, wobei der Mischtrog mit einer Austragsöffnung versehen ist und an der Unterseite seines Bodens an einem an einem Fahrzeug anbringbaren Haltegeschirr schwenkbar befestigt ist, und bei dem die in Fahrtrichtung vordere Seitenwand des Mischtroges planliegend mit einer über die Breite des Troges reichenden Kante ausgeführt ist, die bis in die Waagerechte schwenkbar ist.

In der DE-A-2 937 637 wird ein Mischgerät zum Mischen für insbesondere klumpenbildende Mischungen mit einem Mischtrog vorgeschlagen, bei dem innerhalb des Troges, konzentrisch zum Verlauf des Trogbodens eine Welle verläuft, die ein Mischwerk antreibt. Das Mischgerät dient dazu, insbesondere Futtermischungen, und zwar ein sogenanntes Corn-Cob-Mix herstellen zu können, wobei verschiedene Ingredienzen im Mischtrog homogen miteinander vermischt werden sollen.

Es hat sich bei der Arbeit mit dem bereits vorgeschlagenen Mischgerät gezeigt, daß dieses zwar vollkommen zufriedenstellend arbeitet, es jedoch nachteilig ist, daß zum Befüllen des Mischtroges immer über die obere Kante gearbeitet werden muß.

Durch die FR-A 2 410 443 ist weiterhin ein Mischgerät bekannt, bei dem der Mischtrog an der Unterseite seines Bodens an einem Haltegeschirr schwenkbar befestigt ist. Das Haltegeschirr des Mischgerätes kann an einem landwirtschaftlichen Fahrzeug angebracht werden. Die Schwenkbewegung des Mischtroges wird durch eine Kolben-Zylinder-Anordnung ermöglicht, deren einer Haltepunkt an dem Haltegeschirr und deren anderer Haltepunkt an dem Mischtrog angeordnet ist.

Der Mischtrog ist damit ähnlich wie eine Baggerschaufel von einer aufrechten Misch- und Austragstellung in eine waagerechte Aufnahmestellung verschwenkbar, wobei in letzterer die Kante der in Fahrtrichtung vorderen Seitenwand des Mischtroges soweit abgesenkt ist, daß sie praktisch auf dem Boden ruht. In dieser Stellung kann der Mischtrog direkt in eine lose liegende Häufelung von abgefrästem Corn-Cob-Mix eingefahren und vollständig oder teilweise gefüllt werden.

Nachteilig ist bei den bekannten Mischgeräten, daß während des Mischens in den Mischtrog hineingegriffen werden kann und somit durch das in dem Trog rotierende Mischwerkzeug Verletzungen auftreten können. Diese Gefahr besteht insbesondere deshalb, weil während des Mischens der Corn-Cob-Mischung meist manuell noch Futterzusätze zugegeben werden, die von oben in den Trog geschüttet werden.

Es stellt sich demnach die Aufgabe, ein Mischgerät der eingangs genannten Art anzugeben, bei dem mögliche Verletzungen durch das im Trog rotierende Mischwerkzeug sicher vermieden werden, bei dem aber gleichzeitig sichergestellt ist, daß die Zugabe von zusätzlichen Futterbestandteilen nicht behindert wird und daß der Mischvorgang weiterhin optisch überwacht werden kann.

Diese Aufgabe wird dadurch gelöst, daß an dem Haltegeschirr dicht über dem Mischtrog eine Abdeckung befestigt ist, die die Öffnung des Troges in seiner Mischstellung abdeckt.

Die Abdeckung ist vorteilhaft aus einem Rahmen aufgebaut, dessen Öffnung mit einem Drahtgitter bespannt ist, dessen Maschenweite groß genug ist, um Zusatzfutterstoffe hindurch schütten zu können, ein Hindurchgreifen aber verhindert. Vorteilhaft kann die Abdeckung besonders dicht über der Öffnung des Mischtroges angebracht werden, indem das Drahtgitter im Abstand von dem Rahmen von zwei in Troglängsrichtung verlaufenden und gegenüber dem Rahmen abgestützten Streben aus der Rahmenebene heraus derart nach oben auf Abstand von der Rahmenebene gehalten wird, daß beim Schwenken des Mischtroges dessen Hinterkante sich ungehindert bewegen kann. Die Abdeckung ist dabei vorteilhaft mit dem Haltegeschirr durch mindestens eine Stütze verbunden.

Zusätzlich zu der Mischkante oder anstelle der Mischkante kann der Mischtrog mit Zinken in Form eines Rechens oder in Form einer Gabel versehen sein, die in Fahrtrichtung zeigen. Damit ist möglich, beispielsweise einzelne, geschnittene Silageblöcke aufzunehmen und ohne große Mühe in den Mischtrog einzubringen.

Der erweiterte Arbeitsbereich des Mischtroges macht es erforderlich, daß auch die Förderschnecke, die im unteren Teil des Mischtroges, vorzugsweise etwas seitlich verschoben, angeordnet ist, angepaßt wird. Hierzu wird vorgeschlagen, daß die Austragsöffnung des Förderkanals mit der Förderschnecke seitlich am Mischtrog endet und im Bereich der Austragsöffnung sich erweitert. Das kann beispielsweise durch einen auf die Seitenwand aufgesetzten Erweiterungsstutzen geschehen, in dem auch ein Teil der Schnecke rotiert, jedoch mit einem größeren Durchmesser.

Wie bereits angedeutet, wird das Mischgerät an einem mit Antriebszapfwelle versehenen Fahrzeug angebracht. Hierbei ist vorzugsweise ein erstes Umlenkgetriebe [+] mit Zapfwellenanschluß starr mit dem Haltegeschirr verbunden. Ein zweites Umlenkgetriebe, das zusammen mit dem Mischtrog geschwenkt wird, ist im Fußbereich

[+] Unter Umlenkgetriebe wird hier ein Getriebe mit zwei Zapfwellen und beidseitigen Kreuzgelenken verstanden.

des Mischtroges angebracht und mit dem ersten Umlenkgetriebe über eine Teleskopwelle verbunden. Damit ist möglich, daß auch nach dem Verschwenken des Mischtroges das Mischwerk rotieren kann, was beispielsweise das Austragen von Resten und das sogenannte Anmischen erleichtert.

Anstelle dieser Konstruktion kann das erste Umlenkgetriebe auch mit dem schwenkbaren Mischtrog verbunden sein, wobei allerdings der Kraftangriffspunkt der Zapfwelle an diesem Getriebe in Mischstellung des Mischtroges unterhalb der Schwenkachse des Mischtroges liegen sollte.

Eine weitere, sehr vorteilhafte Ausgestaltung des erfindungsgemäßen Gegenstandes ist, daß an der aufhängeseitigen Kante des Mischtroges (also gegenüber der in Aufnahmestellung untenliegenden) ein in Fahrtrichtung und/oder quer dazu verfahrbares Schneidmesser mit dem Mischtrog verbunden ist. Der Arbeitsbereich dieses Schneidmessers liegt demnach vor der Öffnung des Mischtroges. Damit können Silagefutterblöcke paßgerecht geschnitten werden, was ebenfalls die Aufnahmemöglichkeit und Arbeitsgeschwindigkeit des Gerätes wesentlich erhöht.

Im folgenden werden Ausführungsbeispiele der Erfindung anhand von Zeichnungen näher beschrieben. Die Figuren zeigen :

Figur 1   die Seitenansicht eines Mischgerätes mit Mischtrog und Aufhängung in der Mischstellung ;

Figur 2   zeigt das Gerät der Figur 1 in Seitenansicht in Aufnahmestellung ;

Figur 3   zeigt einen Schnitt durch den unteren Bereich des Gerätes mit der Förderschnecke und dem Förderkanal ;

Figur 4   zeigt eine andere Ausführungsform des Mischgerätes mit einem Schneidgerät in Mischstellung ;

Figur 5   zeigt das Gerät der Figur 4 in Aufnahme- und Schneidstellung.

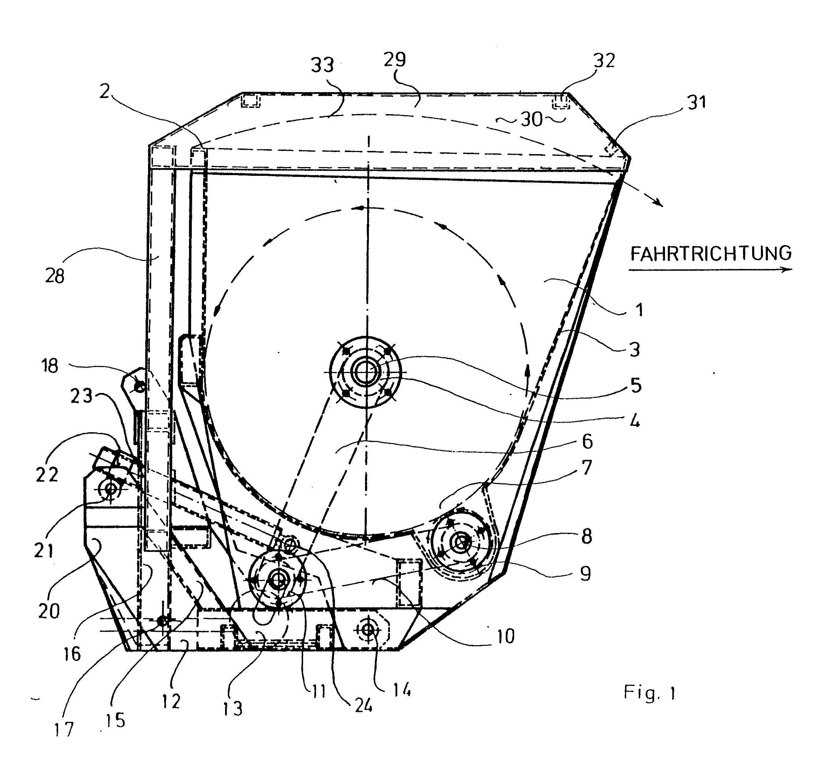

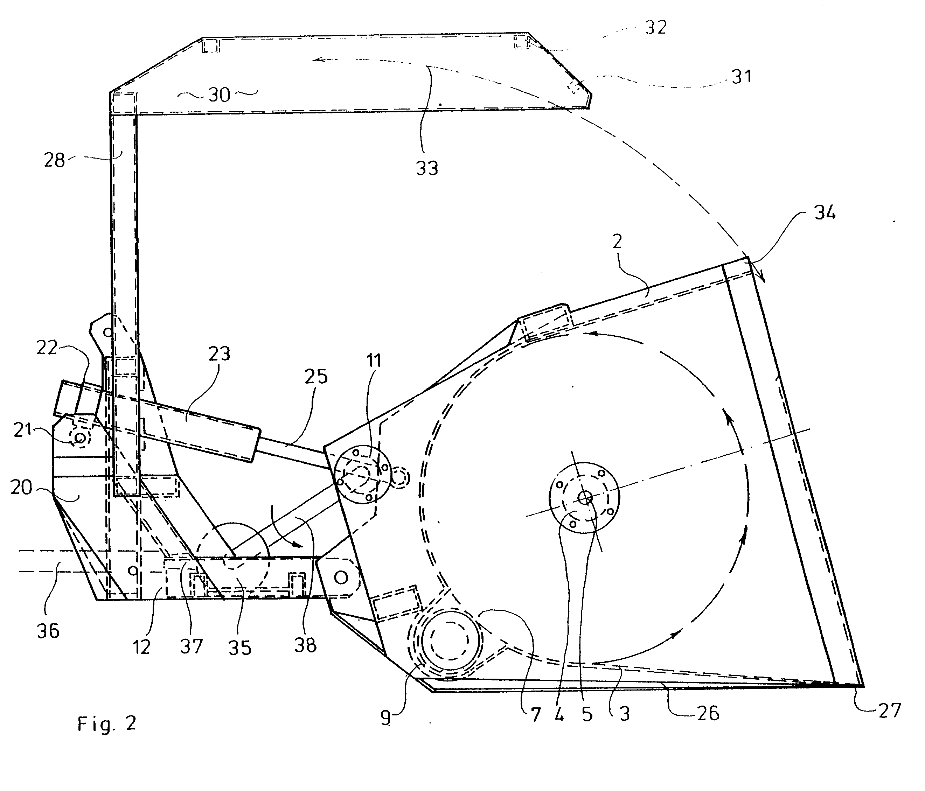

In den Figuren 1 und 2 ist das Mischgerät mit einem Mischtrog 1 in der Misch- bzw. in der Aufnahmestellung dargestellt. Der Mischtrog 1 besteht aus einem bis auf die Oberseite allseitig geschlossenen Gehäuse 2. Das Gehäuse ist an den parallel zur Bildebene liegenden Seitenwänden mit abgedeckten Getriebeelementen versehen. In das Gehäuse 2 des Mischgerätes ist weiterhin eine im Bodenteil abgerundete Mischwanne 3 eingebaut, in der ein Mischwerk 4 zum Mischen und Umwälzen des (nicht dargestellten) Mischgutes rotiert. Das Mischwerk rotiert um eine Welle 5, die über eine außerhalb des Gehäuses seitlich angebrachte Antriebskette 6 und entsprechende Zahnräder angetrieben wird.

Bei dem Mischwerk handelt es sich beispielsweise um ein System von messerartigen Streifen, oder um an der Welle befestigte Mischarme oder dergleichen, mit denen eine homogene Durchmischung des Mischgutes erreicht werden kann. Eine bestimmte Art eines solchen Mischwerkes ist in der DE-OS 2 937 637 (nachveröffentlicht) dargestellt.

Eine Öffnung 7 zum Austragen des fertigen Gemisches ist unter einem Winkel von ca. 30° in Drehrichtung des Mischwerkes in Bezug auf die vertikale Projektion der Welle 5 angeordnet. Unterhalb der Öffnung 7 in einem von einem weiteren Gehäuseteil umschlossenen Kanal 9 ist eine Austragsschnecke 8 angeordnet, deren eines Ende aus dem Gehäuse des Mischtroges herausgeführt ist. Am Ende der Mischschnecke kann sich diese beispielsweise auf ein Förderband entleeren oder direkt in einen Futtertrog.

Die Schnecke 8 wird über eine Kette 10 angetrieben, die wiederum zu einem Umlenkgetriebe 11 führt, welches mit wenigstens zwei Abtriebsrädern ausgerüstet ist, welche die beiden Ketten 6 und 10 auf zwei verschiedene Seiten des Gehäuses antreiben.

Der Mischtrog 1 ist an der Unterseite seines Bodens an einem an einem Fahrzeug (nicht dargestellt) anbringbaren Haltegeschirr 12, das wenigstens einen in Fahrzeugfahrtrichtung vorkragenden Haltearm 13 besitzt, im Bereich einer Schwenkachse 14 schwenkbar befestigt. Der oder die Haltearme 13 sind über entsprechende Schrägtraversen 15 mit einem Ständer 16 verbunden, der zwei Fixpunkte 17, 18 aufweist, mit denen das Haltegeschirr an einem Traktor mit entsprechend genormten Anbringungspunkten zu befestigen ist. Im vorliegenden Fall ist die Vorrichtung nur von der Seite zu sehen. Es ist daher erforderlich, daß ein Ständer 16 mit entsprechenden Haltepunkten wenigstens zweifach über die Breite des Schleppers oder dergleichen vorhanden ist. Es können jedoch auch drei oder vier derartiger Anbringvorrichtungen vorgesehen sein, wobei es im wesentlichen von der Belastung abhängt, welche Ausführung der Fachmann wählen wird.

Starr mit den Ständern 16 ist eine Haltewand 20 verbunden, die eine Achsbohrung 21 aufweist, in der eine Zylinderschelle 22 einseitig drehbar befestigt ist. Die Schelle 22 hält einen hydraulisch betätigbaren Zylinder 23, dessen bewegliche Kolbenstange im Angriffspunkt 24 drehbeweglich endet. Auch hier ist darauf hinzuweisen, daß über die Breite des Schleppers verteilt wenigstens zwei derartiger Kolben-Zylinder-Anordnungen vorgesehen sind. Die Anordnungen werden vorzugsweise mit der regelbaren Hydraulik-Druckverteilungsanlage des Schleppers betrieben.

Wie aus der Figur 2 erkennbar ist, kann mit Hilfe des Kolbens eine Kolbenstange 25 ausgefahren werden, die den gesamten Mischtrog in Fahrtrichtung kippt bzw. schwenkt. Um eine zum Boden parallele Lage zu erhalten, ist die vordere Seitenwand 26 des Mischtroges 1 genau plan ausgestattet und läuft in eine spitz zulaufende Kante 27 aus, die über die Breite des Troges reicht und bis in die Waagerechte schwenkbar ist.

Mit dem Haltegeschirr 12 bzw. dessen Teilen, wie z. B. dem Ständer 16 oder den Schrägtraversen 15 sind aufrechtstehende Stützen 28 verbunden, die an ihrem oberen Ende die Abdeckung 29 tragen. Die Abdeckung 29 besteht aus Seitenplatten 30, die in den Ebenen außen neben den Seitenplatten des Mischtroges liegen und die zusammen mit längs verlaufenden Streben einen Rahmen 31 bilden. Zwischen den Seitenplatten verlaufen weiterhin in Troglängsrichtung Streben 32, die soweit oberhalb des Rahmens angeordnet sind, daß die von ihnen gebildete Ebene außerhalb der Bewegungsbahn 33 der Hinterkante 34 des Mischtroges 1 liegt. Zwischen den Seitenplatten und den Längsstreben des Rahmens ist ein Drahtgitter über die Streben 32 gespannt, das mit dem Rahmen fest verbunden ist. Beim Verschwenken des Mischtroges 1 in seine waagerechte Lage ist dadurch sichergestellt, daß die Hinterkante 34 des Mischtroges 1 unterhalb des Drahtgitters ungehindert bewegt werden kann, wobei gleichzeitig sichergestellt ist, daß die Teile des Rahmens mit ihren Unterkanten neben den Oberkanten des Trograndes verlaufen können. Dadurch kann sicher verhindert werden, daß in den Schlitz zwischen der Abdeckung und dem Trogoberrand ein Durchgriff, z. B. von spielenden Kindern, erfolgen kann, ohne daß die Schwenkbewegung des Mischtroges beeinträchtigt würde. Durch die Verwendung des Drahtgitters ist aber weiterhin sichergestellt, daß Futterzusatzbestandteile leicht in den Trog eingebracht werden können und daß eine optische Mischkontrolle nicht beeinträchtigt wird.

Die Maschen des Drahtgitters sind von einer Größe, daß ein Hindurchgreifen verhindert wird, ohne daß die Zugabe der Futtergestandteile auch mit größeren Brocken behindert würde.

Das Umlenkgetriebe 11 ist in den beiden Stellungen gemäß Figur 1 bzw. 2 jeweils verschieden weit vom Haltegeschirr 12 entfernt ; um die Entfernung zu überbrücken, ist ein erstes Umlenkgetriebe 35 starr auf das Haltegeschirr 12 auf den Haltearm 13 aufmontiert, so daß eine Zapfwelle 36 eines entsprechenden landwirtschaftlichen Fahrzeugs direkt mit einem Antriebszapfen 37 verbunden werden kann. Über eine Teleskopwelle 38 sind die beiden Getriebe 35 und 11 miteinander verbunden, wobei sichergestellt ist, daß auch im gekippten Zustand die Welle 5 und die Schnecke 8 gedreht werden können. Derartige überbrückende Antriebe sind an sich bekannt. Anstelle einer Teleskopwelle kann auch ein Hydraulikmotor oder dergleichen verwendet werden. Wesentlich ist, daß ohne umständliche An- oder Abbaumaßnahmen der Mischtrog 1 so geschwerkt werden kann, daß er wie eine Baggerschaufel in Aufnahmestellung liegt und direkt durch Vorfahren des Fahrzeuges aufgehäuftes Gut aufnehmen kann. Für die Bedienungsperson ist auch sehr einfach, eventuelle Rest noch in den Mischbereich einzuschaufeln.

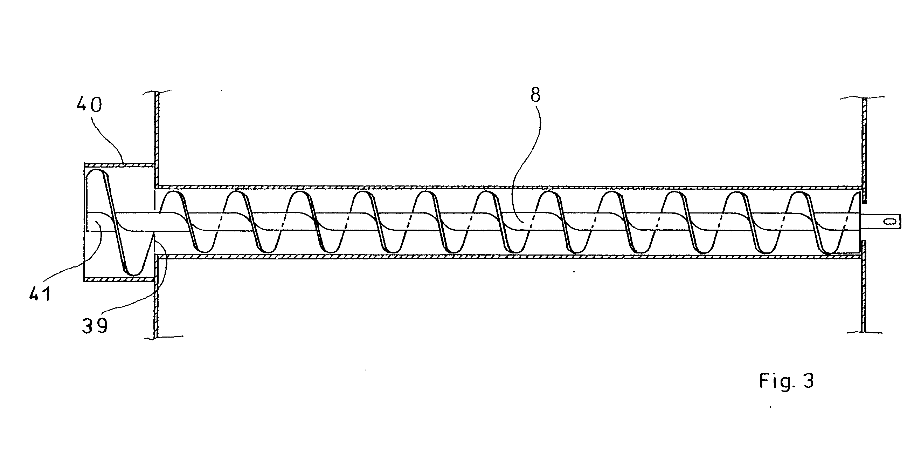

Es hat sich erwiesen, daß über die relativ große Breite der Mischtrommel (senkrecht zur Bildebene) es nicht immer einfach ist, die Austragschnecke 8 zu betätigen, ohne daß es zu Verstopfungen im Austrittsbereich kommt (vgl. Figur 3). Daher wird die Austragsöffnung 39, die seitlich am Mischtrog den Förderkanal enden läßt, so erweitert, daß am Ende außerhalb des eigentlichen Mischtrog-Gehäuses 2, ein Erweiterungsstutzen 40 angebracht ist, in dem sich ein kurzes Stück der Förderschnecke mit einem erweiterten Durchmesser bewegt (Bezugszahl 41). Diese Erweiterung sorgt dafür, daß aus dem Austragskanal 9 das Mischgut ohne Verstopfungsgefahr quasi herausgezogen wird.

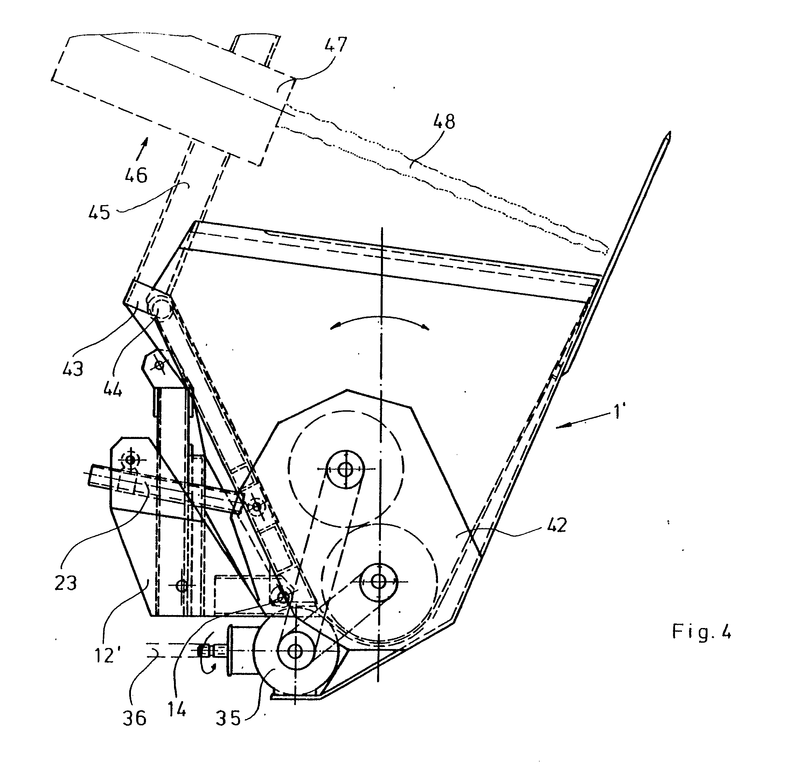

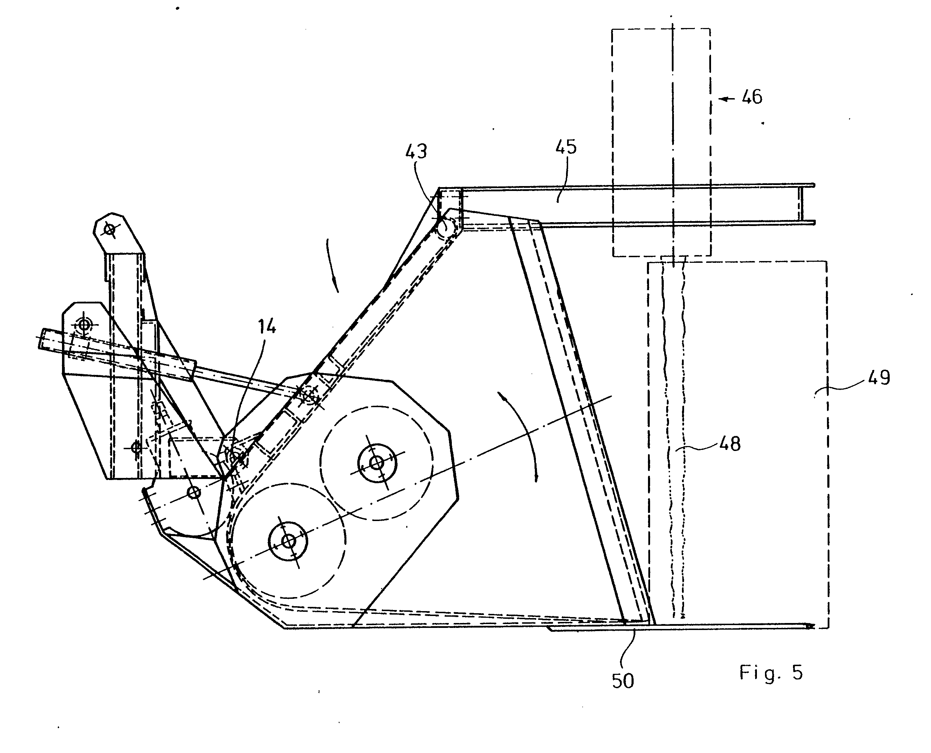

Eine etwas geänderte und in ihrer Anwendung erweiterte Ausführungsform des Mischgerätes gemäß vorliegender Anmeldung zeigen die Figuren 4 und 5.

Auch dieses Mischgerät besitzt einen Mischtrog 1', der eine nach oben offene Seite besitzt, wobei in dem Mischtrog ein (nicht dargestelltes) Mischwerk rotiert. Der Mischtrog 1' ist an der Unterseite seines Bodens über eine Schwenkachse 14 verschwenkbar mit einem Haltegeschirr 12' verbunden. Die Schwenkbarkeit wird ebenfalls durch hydraulisch betätigbare Kolben-Zylinder-Anordnungen 23 durchgeführt, von denen wenigstens zwei über die Breite des Schleppers verteilt sind.

Unterhalb des Schwenkpunktes liegt ein mit dem Mischtrog 1' verbundenes Umlenkgetriebe 35, das über einen knickfähigen oder flexiblen Zapfwellenanschluß 36 angetrieben wird. Über entsprechende Kettentriebe, die seitlich in einem Gehäuse 42 geschützt liegen, werden Schnecke und Mischwerk angetrieben. Wesentlich ist, daß in dieser Ausführungsform das erste Umlenkgetriebe schon mit dem Trog verbunden ist, was eine sehr kompakte und raumsparende Bauweise ermöglicht. Selbstverständlich kann hierzu auch ein Hydraulikmotor eingesetzt werden.

Die Vorrichtung gemäß den Figuren 4 und 5 verfügt ferner über eine an der aufhängeseitigen Kante 43 an einer Traverse 44 und vorragenden Tragschiene 45 angebrachte Schneidvorrichtung 46, die im wesentlichen aus einer Antriebsvorrichtung 47 und einem Kurzhub-Messer 48 besteht. Wie erkennbar, ist die Schneidevorrichtung mit dem Messer 48 so angeordnet, daß ihr Arbeitsbereich vor der Öffnung des nach vorne geschwenkten Mischtroges liegt. Dies ist insbesondere aus Figur 5 ersichtlich. Das Messer, das entlang dem Träger 45 verfahren werden kann, schneidet dabei durch Silageblöcke 49, und zwar sowohl in Fahrtrichtung des Fahrzeuges als auch senkrecht dazu, so daß größere oder kleinere Blöcke verarbeitungsgerecht zugeschnitten werden können. Die Blöcke, die bereits von Gabelzinken 50 unterfahren worden sind, die mit dem Mischtrog verbunden sind, fallen beim Hochschwenken des Mischtroges direkt in diesen hinein und können dort verarbeitet werden.

Insbesondere diese Weiterentwicklung des Mischtroges gemäß Erfindung gibt die Möglichkeit, daß in einfacher Weise Silagefutter aus befahrbaren Silos herausgeholt werden kann, ohne daß es technisch komplizierter oder mühsamer Zwischenschritte bedarf.

Die Konstruktion derartiger Schneidmesser ist an sich bekannt. Es ist möglich, das Schneidmesser auch an beispielsweise seitlich an dem Gehäuse anbringbaren Trägern zu befestigen. Wesentlich ist, daß der Arbeitsbereich des Schneidmessers vor der heruntergeklappten Mischtrogöffnung zu liegen kommt.

Insgesamt gibt damit die Erfindung eine Reihe von weiteren Möglichkeiten, die die landwirtschaftliche Produktion wesentlich erleichtern.

**Patentansprüche**

1. Mischgerät zum Mischen insbesondere von Futtermischungen, mit einem nach oben offenen Mischtrog (1), in dem ein Mischwerk (4) um eine waagerechte Welle (5) rotiert, wobei der Mischtrog (1) mit einer Austragsöffnung versehen ist und an der Unterseite seines Bodens an einem an einem Fahrzeug anbringbaren Haltegeschirr (12) schwenkbar befestigt ist, und bei dem die in Fahrtrichtung vordere Seitenwand (26) des Mischtroges (1) planliegend mit einer über die Breite des Troges reichenden Kante (27) ausgeführt ist, die bis in die Waagerechte schwenkbar ist, dadurch gekennzeichnet, daß an dem Haltegeschirr (12) dicht über dem Mischtrog (1) eine Abdeckung (29) befestigt ist, die die Öffnung des Troges (1) in seiner Mischstellung abdeckt.

2. Mischgerät nach Anspruch 1, dadurch gekennzeichnet, daß die Abdeckung (29) aus einem Rahmen (31) besteht, dessen Öffnung mit einem Drahtgitter bespannt ist, dessen Maschenweite groß genug ist, um Zusatzfutterstoffe hindurch schütten zu können, ein Hindurchgreifen aber verhindert.

3. Mischgerät nach Anspruch 1 oder 2, dadurch gekennzeichnet, daß das Drahtgitter im Abstand von dem Rahmen (31) von zwei in Troglängsrichtung verlaufenden und gegenüber dem Rahmen (31) abgestützten Streben (32) aus der Rahmenebene heraus derart nach oben auf Abstand von der Rahmenebene gehalten wird, daß beim Schwenken des Mischtroges (1) dessen Hinterkante (34) sich ungehindert (entlang der Bahn 33) bewegen kann.

4. Mischgerät nach einem der Ansprüche 1 bis 3, dadurch gekennzeichnet, daß die Abdeckung (29) mit dem Haltegeschirr (12) durch mindestens eine Stütze (28) verbunden ist.

5. Mischgerät nach Anspruch 1, dadurch gekennzeichnet, daß die Kante der vorderen Seitenwand mit Zinken (50) versehen ist, die in Fahrtrichtung zeigen.

6. Mischgerät nach Anspruch 1, mit einer im unteren Bereich des Mischtroges befindlichen Austragsöffnung (7), die von einem Förderkanal (9) umgeben ist, der seitlich am Mischtrog endet, dadurch gekennzeichnet, daß der Förderkanal (9) sich im Bereich der Seitenwandung erweitert.

7. Mischgerät nach Anspruch 1, zur Anbringung an einem mit Antriebszapfwelle versehenem Fahrzeug, dadurch gekennzeichnet, daß ein erstes Umlenkgetriebe (35) mit Zapfwellenanschluß (37) starr mit dem Haltegeschirr (12) verbunden ist und mit einem zweiten Umlenkgetriebe (11), das im Fußbereich des Mischtroges (1) angebracht ist, über eine Teleskopwelle (38) verbunden ist.

8. Mischgerät nach Anspruch 1, zur Anbringung an einem mit Antriebszapfwelle versehenem Fahrzeug, dadurch gekennzeichnet, daß ein erstes Umlenkgetriebe (35) mit dem schwenkbaren Mischtrog (1) verbunden ist, wobei der Kraftangriffspunkt der Zapfwelle am Getriebe (35) in Mischstellung des Mischtroges unterhalb der Schwenkachse (14) des Mischtroges liegt.

9. Mischgerät nach Anspruch 1, dadurch gekennzeichnet, daß der Mischtrog (1) mit einer von der Öffnung des Mischtroges arbeitenden Schneidvorrichtung (46) ausgerüstet ist.

10. Mischgerät nach Anspruch 9, dadurch gekennzeichnet, daß an der aufhängeseitigen Kante (43) des Mischtroges (1) an einer Traverse (44) ein in Fahrtrichtung und/oder quer dazu verfahrbares Schneidmesser (48) beweglich angeordnet ist.

**Claims**

1. Pivoting blender for blending especially animal feed mixtures, comprising a blending trough (1) open at the upper side and having disposed therein a mixer or blender mechanism (4) rotatable around a horizontal shaft (5), the blending through (1) being provided with a discharge opening and having the lower side of its bottom pivotally mounted to a fixing assembly (12) adapted to be attached to a vehicle, and wherein the front side wall (26), leading in the direction of travel, of the blending trough (1) is formed to be planar with an edge (27) extending across the width of the trough, which is adapted to be pivoted to a horizontal position, characterized in that the fixing assembly (12) has mounted thereto in a location closely above the blending trough (1) a cover (29) which covers the opening of the trough (1) in the blending position thereof.

2. The blender according to claim 1, characterized in that the cover (29) comprises a frame (31) the opening of which has stretched thereacross a wire mesh, the mesh size of the wire mesh being sufficient to permit additional feed material to be poured therethrough while preventing hands from reaching therethrough.

3. The blender according to claim 1 or 2, characterized in that the wire mesh is held spaced from the frame (31) by a pair of struts (32) extending in the longitudinal direction of the through and supported from the frame (31) to extend upwards with a spacing from the plane of the frame such that when the blending through (1) is pivoted, the rear edge (34) thereof is free to move (along a path 33).

4. The blender according to any one of claims 1 to 3, characterized in that the cover (29) is connected to the fixing assembly (12) by a least one support (28).

5. The blender according to claim 1, characterized in that the edge of the front side wall is provided with prongs or teeth (50) facing in the direction of travel.

6. The blender according to claim 1, comprising a discharge opening (7) located in the lower portion of the blending trough and being enclosed by a conveyor duct (9) which terminates at a lateral position of the blending trough, characterized in that the conveyor duct (9) is enlarged in the region of the side wall.

7. The blender according to claim 1, for attachment to a vehicle provided with power take-off shaft, characterized in that a first angle gearing (35) including a power take-off shaft adapter (37) is rigidly joined to the fixing assembly (12) and connected through a telescoping shaft (38) to a second angle gearing (11) provided at the base portion of the blending trough (1).

8. The blender according to claim 1, for attachment to a vehicle provided with power take-off shaft, characterized in that a first angle gearing (35) is joined to the pivotable blending trough (1), with the power transmission point of the take-off shaft on the gearing (35) being located below the pivot axis (14) of the blending trough in the blending position of the blending trough.

9. The blender according to claim 1, characterized in that the blending trough (1) is provided with a cutter device (46) operative in front of the opening of the blending trough.

10. The blender according to claim 9, characterized in that the suspension-side edge (43) of the blending trough (1) has movably positioned thereon on a transverse beam (44), a cutting blade (48) adapted to be moved in the direction of travel and/or transversely of said direction.

## Revendications

1. Appareil mélangeur, notamment pour réaliser des mélanges d'aliments pour bétail, comportant une benne mélangeuse (1) ouverte vers le haut dans laquelle un mécanisme mélangeur (4) tourne autour d'un arbre horizontal (5), cette benne mélangeuse (1) étant munie d'une ouverture d'extraction et étant fixée, par le côté dessous de son fond, à un bâti de fixation (12) agençable sur un véhicule, la paroi latérale (26) de la benne mélangeuse (1) située à l'avant dans la direction de déplacement du véhicule étant réalisée plane avec une arête (27) s'étendant sur la largeur de cette benne et pouvant être basculée jusqu'à l'horizontale, caractérisé en ce qu'une couverture (29) recouvrant l'ouverture de la benne (1) lorsque celle-ci est à sa position de mélange est fixée au bâti de fixation (12), à proximité immédiate et au-dessus de la benne mélangeuse (1).

2. Appareil mélangeur selon la revendication 1, caractérisé en ce que la couverture (29) est constituée par un cadre (31) dont l'ouverture est garnie d'un grillage en fil dont la largeur de maille est assez grande pour permettre de verser des additifs alimentaires au travers des mailles, mais empêche l'accès manuel.

3. Appareil mélangeur selon la revendication 1 ou 2, caractérisé en ce que deux jambes (32) dirigées dans la direction longitudinale de la benne et prenant appui sur le cadre (31) maintiennent le grillage en fil hors du plan du cadre, à distance au-dessus de celui-ci (31), de manière que le bord arrière (34) de la benne mélangeuse (1) puisse se déplacer sans obstacle (le long de la trajectoire 33) lors du basculement de cette benne.

4. Appareil mélangeur selon l'une quelconque des revendications 1 à 3, caractérisé en ce que la couverture (29) est assemblée au bâti de fixation (12) par au moins une chandelle (28).

5. Appareil mélangeur selon la revendication 1, caractérisé en ce que l'arête de la paroi latérale antérieure est pourvue de fourchons (50) dirigés dans la direction du déplacement.

6. Appareil mélangeur selon la revendication 1, comportant une ouverture d'extraction (7) se trouvant dans la région inférieure de la benne mélangeuse et entourée par un canal de transport (9) se terminant sur le côté de la benne mélangeuse, caractérisé en ce que le canal de transport (9) s'élargit dans la région de la paroi latérale.

7. Appareil mélangeur selon la revendication 1, pour agencement sur un véhicule muni d'un bout d'arbre d'entraînement, caractérisé en ce qu'un premier mécanisme de renvoi (35) avec raccord de bout d'arbre (37) est rigidement lié au bâti de fixation (12) et est lié, par l'intermédiaire d'un arbre télescopique (38), à un deuxième mécanisme de renvoi (11) qui est agencé dans la zone de base de la benne mélangeuse (1).

8. Appareil mélangeur selon la revendication 1, pour agencement sur un véhicule muni d'un bout d'arbre d'entraînement, caractérisé en ce qu'un premier mécanisme de renvoi (35) est lié à la benne mélangeuse basculable (1), le point par lequel le bout d'arbre attaque le mécanisme de renvoi (35) se trouvant en dessous lorsque celle-ci est en position de mélange.

9. Appareil mélangeur selon la revendication 1, caractérisé en ce que la benne mélangeuse (1) est équipée d'un dispositif de coupe (46) opérant devant l'ouverture de cette benne.

10. Appareil mélangeur selon la revendication 9, caractérisé en ce qu'un couteau (48), déplaçable dans la direction de déplacement du véhicule et/ou transversalement à cette direction, est agencé avec possibilité de déplacement sur l'arête (43) côté suspension de la benne mélangeuse (1), sur une traverse (44).

FAHRTRICHTUNG

Fig. 1

Fig. 2

0 061 666

0 061 666

Fig. 3

3

Fig. 4

Fig. 5

0 061 666